# EUROPEAN PATENT APPLICATION

(11) **EP 4 589 811 A1**
(43) Date of publication of application: **23.07.2025**
(21) Application number: 25150636.6
(22) Date of filing: 08.01.2025
(51) Int. Cl.: H02K 1/16, H02K 3/12, H02K 3/50, H02K 15/24

(54) **STATOR**

(30) Priority: 17.01.2024 JP 2024005513
(71) Applicant: TOYOTA JIDOSHA KABUSHIKI KAISHA, Aichi-ken, 471-8571 (JP)
(72) Inventor: NAGAI, Shingo, Aichi-ken, 471-8571 (JP); WATANABE, Kohei, Aichi-ken, 471-8571 (JP); DEGUCHI, Junichi, Aichi-ken, 471-8571 (JP); YOSHIOKA, Kentaro, Aichi-ken, 471-8571 (JP); TAKAO, Ren, Aichi-ken, 471-8571 (JP); KAJIMOTO, Shogo, Aichi-ken, 471-8571 (JP)
(74) Representative: D Young & Co LLP

(57) **Abstract**

A stator may include a core having a cylindrical shape about a central axis extending in an axial direction; and a coil wound around the core. The core may include a cylindrical back yoke; and teeth protruding from an inner circumferential surface of the back yoke, extending in the axial direction, and spaced from each other in a circumferential direction. The teeth may include a first tooth; and a second tooth spaced from the first tooth in the circumferential direction. The coil may include a first line portion including a first axial portion and a first inclined portion connected to the first axial portion. The first axial portion may extend along the axial direction and be located between the first and second teeth. The first inclined portion may be inclined relative to the first axial portion in the circumferential direction toward the first tooth and extend beyond a first end face which is one end face of the teeth in the axial direction. As viewed along a radial direction, an intersection of a straight line extending along a side surface of the first tooth that faces the first line portion and a straight line extending along the first end face is defined as a first intersection and an intersection of a straight line extending along a side surface of the second tooth that faces the first line portion and the straight line extending along the first end face is defined as a second intersection, and a shortest distance between the first intersection and the first tooth may be greater than a shortest distance between the second intersection and the second tooth.

## Description

### REFERENCE TO RELATED APPLICATION

This application claims priority from Japanese Patent Application No. 2024-005513 filed on January 17, 2024. The entire content of the priority application is incorporated herein by reference.

### TECHNICAL FIELD

The disclosure herein relates to a stator.

### BACKGROUND ART

Japanese Patent Application Publication No. 2017-077125 describes a stator of an electric motor. In this stator, line portions of a coil are located between a plurality of teeth. Each line portion includes an axial portion extending in an axial direction and an inclined portion inclined relative to the axial portion in a circumferential direction. The inclined portions extend beyond end faces of the teeth. In this stator, stepped concavities are provided in respective shoulders of each tooth (i.e., interfaces between end faces and side surfaces of each tooth). The concavities in each tooth ensure spaces between the tooth and inclined portions. This allows for a reduction in height of the coil ends and thus allows for a reduction in the size of the stator in the axial direction.

### SUMMARY

In Japanese Patent Application Publication No. 2017-077125, the concavities are provided in all the shoulders of the teeth, by which a flux path in each tooth is narrowed. The disclosure herein provides a technology that allows for a reduction in the size of a stator and a wide flux path in each tooth.

In a first aspect, a stator may comprise a core having a cylindrical shape about a central axis extending in an axial direction; and a coil wound around the core. The core may comprise a cylindrical back yoke; and a plurality of teeth protruding from an inner circumferential surface of the back yoke, extending along the axial direction, and spaced from each other in a circumferential direction. The plurality of teeth may comprise a first tooth; and a second tooth spaced from the first tooth in the circumferential direction. The coil may comprise a first line portion including a first axial portion and a first inclined portion connected to the first axial portion. The first axial portion may extend along the axial direction and is located between the first tooth and the second tooth. The first inclined portion may be inclined relative to the first axial portion in the circumferential direction toward the first tooth and extend beyond a first end face which is one end face of the plurality of teeth in the axial direction. As viewed along a radial direction, an intersection of a straight line extending along a side surface of the first tooth that faces the first line portion and a straight line extending along the first end face is defined as a first intersection and an intersection of a straight line extending along a side surface of the second tooth that faces the first line portion and the straight line extending along the first end face is defined as a second intersection, and a shortest distance between the first intersection and the first tooth may be greater than a shortest distance between the second intersection and the second tooth.

In the stator above, the shortest distance between the first intersection and the first tooth toward which the first inclined portion is inclined is greater. This ensures a distance between the first inclined portion and the first tooth while still allowing the first inclined portion to be located close to the first tooth in the axial direction. Therefore, the height of the coil end can be reduced, and thus the stator can be reduced in size. Further, the shortest distance between the second intersection and the second tooth located opposite to the inclination direction of the first inclined portion is smaller. This ensures a wide flux path in the second tooth.

### BRIEF DESCRIPTION OF DRAWINGS

FIG. 1 shows a perspective view of a stator.
FIG. 2 shows a perspective view of a stator core.
FIG. 3 shows a perspective view of a conductor segment.
FIG. 4 shows a side view of a coil end of the stator core (transparent side view of a core 20).
FIG. 5 shows a plurality of conductor segments connected along a circumferential direction.
FIG. 6 shows an enlarged plan view of teeth 24 and slots 30 viewed in an axial direction.
FIG. 7 shows a cross-sectional view of teeth 24 taken at a position of first line portions S1 along the circumferential direction.
FIG. 8 shows a perspective view of end portions of teeth 24 in the vicinity of an end face 20a.
FIG. 9 shows an enlarged cross-sectional view of teeth 24 near the end face 20a, taken at a position of a first line portion S1 along the circumferential direction.
FIG. 10 shows an enlarged cross-sectional view of teeth 24 near the end face 20a, taken at a position of a second line portion S2 along the circumferential direction.
FIG. 11 shows an enlarged cross-sectional view of teeth 24 near an end face 20b, taken at a position of a first line portion S1 along the circumferential direction.
FIG. 12 shows an enlarged cross-sectional view of teeth 24 near the end face 20b, taken at a position of a second line portion S2 along the circumferential direction.
FIG. 13 shows a cross-sectional view of teeth 24 according to a variant 1 corresponding to FIG. 9.
FIG. 14 shows a cross-sectional view of teeth 24 according to a variant 2 corresponding to FIG. 9.
FIG. 15 shows an enlarged plan view of teeth 24 according to a variant 3 corresponding to FIG. 6.
FIG. 16 shows an enlarged plan view of teeth 24 according to a variant 4 corresponding to FIG. 6.

### DESCRIPTION

In addition to the first aspect described above, additional aspects of the stator disclosed herein will be described below.

(Second Aspect) In the stator according to the first aspect, the coil comprises a second line portion including a second axial portion and a second inclined portion connected to the second axial portion. The second axial portion extends along the axial direction and is located between the first tooth and the second tooth. The first axial portion and the second axial portion are stacked in the radial direction. The second inclined portion is inclined relative to the second axial portion in the circumferential direction toward the second tooth and extends beyond the first end face. As viewed along the radial direction, an intersection of a straight line extending along the side surface of the first tooth that faces the second line portion and the straight line extending along the first end face is defined as a third intersection and an intersection of a straight line extending along the side surface of the second tooth that faces the second line portion and the straight line extending along the first end face is defined as a fourth intersection, and a shortest distance between the fourth intersection and the second tooth is greater than a shortest distance between the third intersection and the first tooth.

(Third Aspect) In the stator according to the second aspect, the first line portion comprises a plurality of first line portions and the second line portion comprises a plurality of second line portions. The first line portions and the second line portions are alternately stacked in the radial direction between the first tooth and the second tooth.

(Fourth Aspect) In the stator according to any one of the first to third aspects, the first inclined portion extends through an area between the first intersection and the first tooth.

(Fifth Aspect) In the stator according to any one of the first to fourth aspects, a stepped concavity is provided in a part of an interface between the side surface of the first tooth and the first end face, the part of the interface facing the first inclined portion.

(Sixth Aspect) In the stator according to any one of the first to fourth aspects, a chamfer is provided in a part of an interface between the side surface of the first tooth and the first end face, the part of the interface facing the first inclined portion.

(Seventh Aspect) In the stator according to the fifth or sixth aspect, a bend between the first axial portion and the first inclined portion is located, in the axial direction, within a range of the concavity or the chamfer.

(Eighth Aspect) In the stator according to any one of the first to seventh aspect, the first line portion comprises a third inclined portion connected to the first axial portion on an opposite side from the first inclined portion. The third inclined portion is inclined relative to the first axial portion in the circumferential direction toward the second tooth and extends beyond a second end face which is another end face of the plurality of teeth in the axial direction and is opposite from the first end face. As viewed along the radial direction, an intersection of the straight line extending along the side surface of the first tooth that faces the first line portion and a straight line extending along the second end face is defined as a fifth intersection and an intersection of the straight line extending along the side surface of the second tooth that faces the first line portion and the straight line extending along the second end face is defined as a sixth intersection, and a shortest distance between the sixth intersection and the second tooth is greater than a shortest distance between the fifth intersection and the first tooth.

(Nineth Aspect) In the stator according to the third aspect, shortest distances between first intersections and the first tooth and shortest distances between fourth intersections and the second tooth are larger as the first intersections and the fourth intersections are located more inward in the radial direction.

(Tenth Aspect) In the stator according to the third aspect, shortest distances between the first intersections and the first tooth and shortest distances between the fourth intersections and the second tooth are smaller as the first intersections and the fourth intersections are located more inward in the radial direction.

(Eleventh Aspect) In the stator according to the second or third aspect, two first line portions and two second line portions are stacked in the radial direction between the first tooth and the second tooth.

According to the second to third aspects, the stator can be reduced in size and wide flux paths are ensured.

According to the fourth aspect, the stator can be further reduced in size.

According to the seventh aspect, a greater distance between the first line portion and the core can be ensured.

According to the eighth embodiment, the stator can be reduced in size and wider flux paths are ensured.

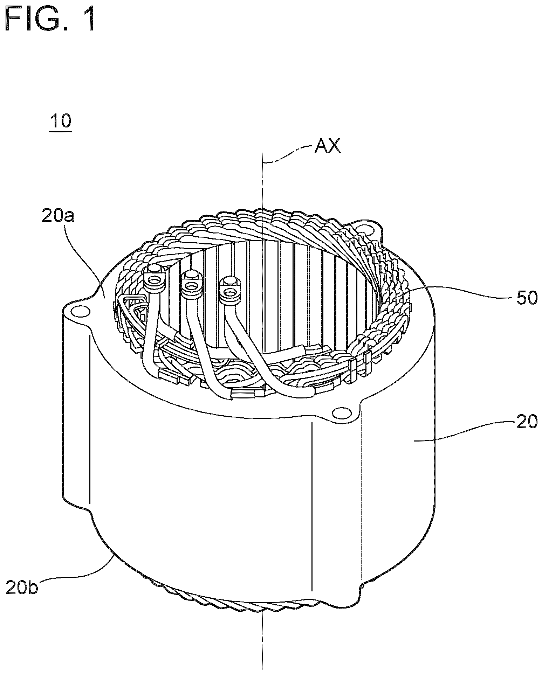

As shown in FIG. 1, a stator 10 according to an embodiment has a substantially cylindrical shape. Hereinafter, a direction parallel to a center axis AX of the stator 10 is termed an axial direction, a direction along a circumference about the center axis AX is termed a circumferential direction, and a direction along the radius of a circle about the center axis AX is termed a radial direction. The circumferential direction comprises one direction referred to as a direction C1 and the opposite direction referred to as a direction C2. A rotor is placed within a center hole of the stator 10, although this is not shown. The rotor and the stator 10 are arranged concentrically. The stator 10 and the rotor constitute an electric motor. The stator 10 comprises a core 20 and a coil 50. The coil 50 is wound on the core 20.

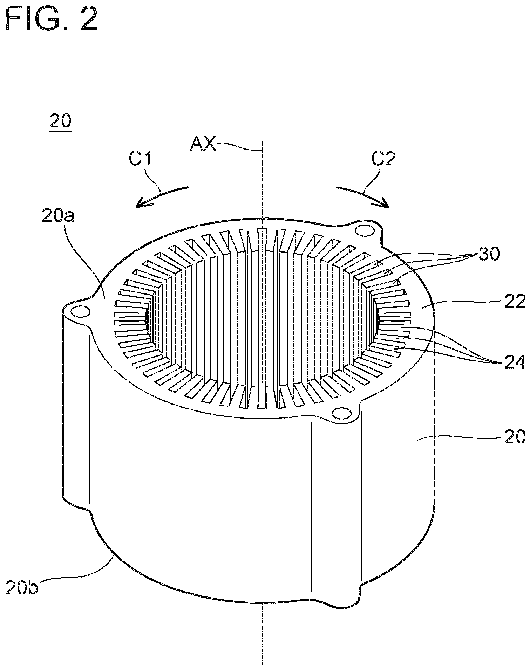

The core 20 may be a core formed of a stack of magnetic steel sheets or a dust core. As shown in FIG. 2, the core 20 comprises a back yoke 22 and a plurality of teeth 24. The back yoke 22 has a cylindrical shape.

The core 20 comprises an end face 20a at one end and an end face 20b at the opposite end. The end faces 20a, 20b each extend along a plane perpendicular to the center axis AX. The plurality of teeth 24 is located on the inner circumferential surface of the back yoke 22. FIG. 2 shows the shape of each tooth 24 in a simplified manner. Each tooth 24 is a protrusion protruding from the inner circumferential surface of the back yoke 22 toward the center axis AX. Each tooth 24 is elongated in the axial direction. Each tooth 24 extends from the end face 20a to the end face 20b. That is, opposing end faces of each tooth 24 in the axial direction are formed by the end face 20a and the end face 20b, respectively. The teeth 24 are spaced from each other in the circumferential direction. A groove-like slot 30 is defined between each pair of adjacent teeth 24. The slots 30 extend in the axial direction from the end face 20a to the end face 20b.

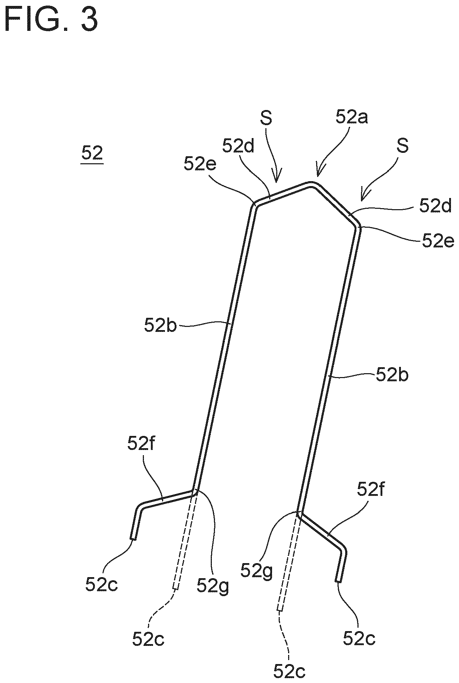

FIG. 3 shows a conductor segment 52 that constitutes the coil 50. The conductor segment 52 is a metal, bent-rod shaped component. An insulation coating is provided on the surface of the conductor segment 52. The coil 50 is formed of a plurality of conductor segments 52 connected to each other. Each conductor segment 52 comprises a U-shaped portion 52a bent in a U-shape and two axial portions 52b extending linearly from the U-shaped portion 52a. In FIG. 3, the broken line indicates the shape of the conductor segment 52 prior to attachment to the core 20. In the conductor segment 52 prior to attachment to the core 20, each axial portion 52b extends linearly up to an end 52c which is opposite from the U-shaped portion 52a.

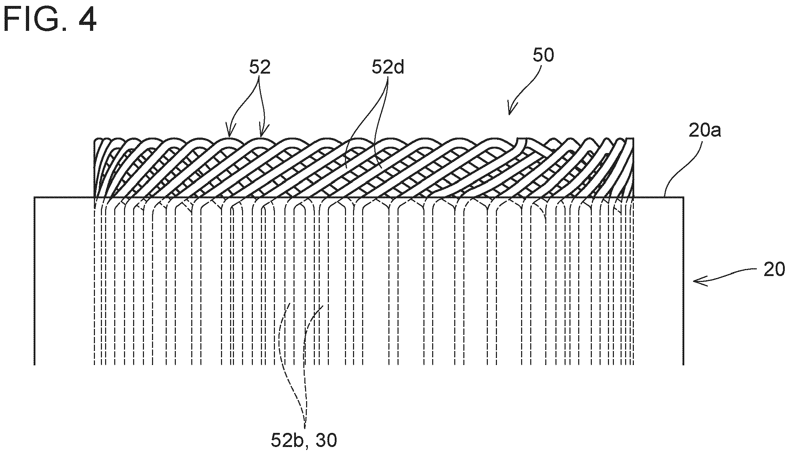

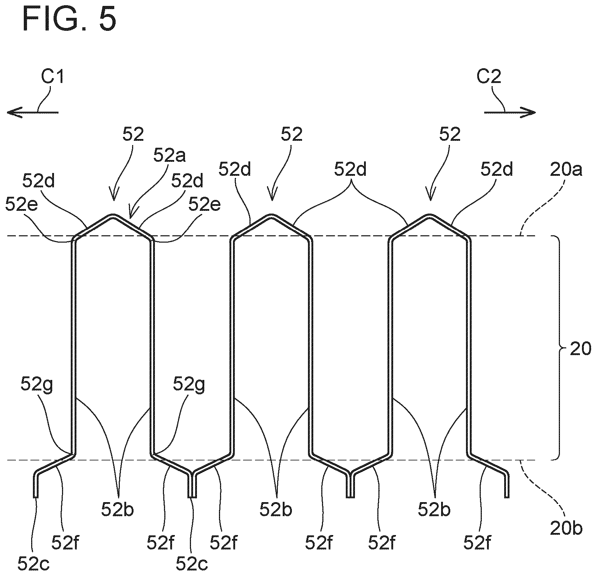

As shown in FIG. 4, the axial portions 52b of the conductor segments 52 are inserted from the end face 20a into corresponding slots 30. The two axial portions 52b of each conductor segment 52 are inserted into different slots 30. As shown in FIG. 5, each conductor segment 52 is inserted into slots 30 such that its ends 52c are positioned outside the core 20 beyond the end face 20b. After the conductor segments 52 have been inserted into the slots 30, portions of the conductor segments 52 that extend beyond the end face 20b of the core 20 are bent in the circumferential direction, as shown in FIGS. 3 and 5. As shown in FIG. 5, after the portions of the conductor segments 52 have been bent on the end face 20b side, the ends 52c of adjacent conductor segments 52 are connected to each other by welding or the like. The coil 50 is formed of the conductor segments 52 connected to each other as above. An insulating member, such as insulating paper, is disposed between the conductor segments 52 and the core 20, although this is not shown. In the completed coil 50, the axial portions 52b extend through corresponding slots 30 in the axial direction. Hereinafter, portions of each conductor segment 52 that are inclined relative to the axial portions 52b in the circumferential direction are termed inclined portions 52d, 52f. The inclined portions 52d protrude beyond the end face 20a. That is, the inclined portions 52d each extend from a position within the core 20 to a position outside the core 20 beyond the end face 20a. The inclined portions 52f protrude beyond the end face 20b. That is, the inclined portions 52f each extend from a position within the core 20 to a position outside the core 20 beyond the end face 20b. Hereinafter, bends of each conductor segment 52 between the axial portions 52b and the inclined portions 52d are termed bends 52e, and bends of each conductor segment 52 between the axial portions 52b and the inclined portions 52f are termed bends 52g. Further, a portion of each segment 52 that extends from one end to the opposite end (i.e., a line portion including an inclined portion 52d, an axial portion 52b, and an inclined portion 52f) is termed a line portion S.

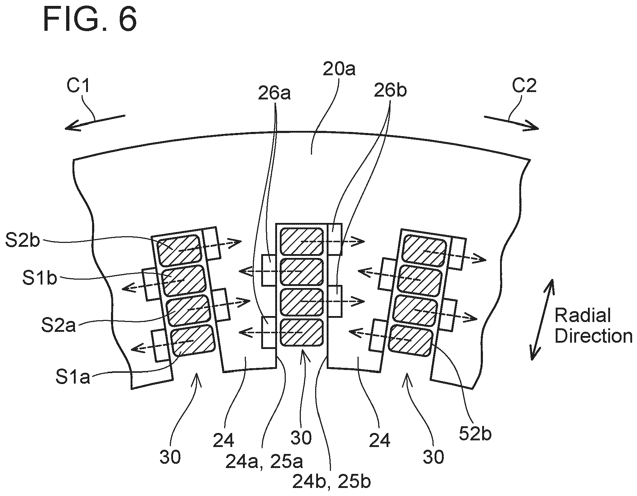

As shown in FIG. 6, within each slot 30, two first line portions S1a, S1b and two second line portions S2a, S2b are alternately stacked in the radial direction. Within each slot 30, the line portion S1a, the line portion S2a, the line portion S1b, and the line portion S2b are arranged in this order in a radially outward direction. Within each slot 30, four axial portions 52b are stacked in the radial direction. Hereinafter, the first line portions S1a, S1b may be termed first line portions S 1, and the second line portions S2a, S2b may be termed second line portions S2.

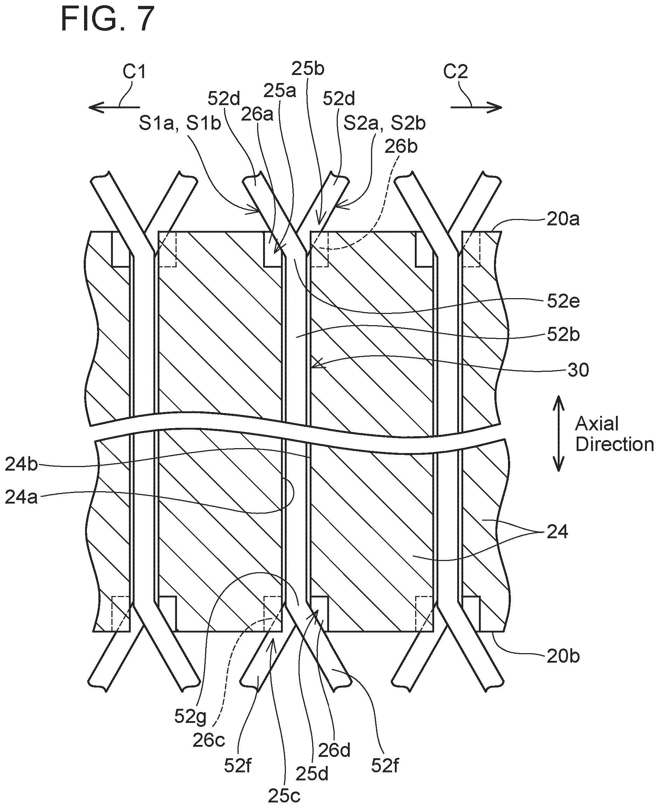

The broken arrows in FIG. 6 show inclination directions of the inclined portions 52d to the axial portions 52b extending within the slots 30 at the end face 20a. As shown in FIGS. 6 and 7, the inclined portions 52d of the first line portions S1 are inclined in the direction C1, while the inclined portions 52d of the second line portions S2 are inclined in the direction C2. That is, within each slot 30, the first line portions S1 including the inclined portions 52d inclined in the direction C1 and the second line portions S2 including the inclined portions 52d inclined in the direction C2 are alternately arranged in the radial direction.

As shown in FIG. 7, at the end face 20b, the inclined portions 52f of the first line portions S1 are inclined in the direction C2, while the inclined portions 52f of the second line portions S2 are inclined in the direction C1. That is, within each slot 30, the first line portions S1 including the inclined portions 52f inclined in the direction C2 and the second line portions S2 including the inclined portions 52f inclined in the direction C1 are alternately arranged in the radial direction.

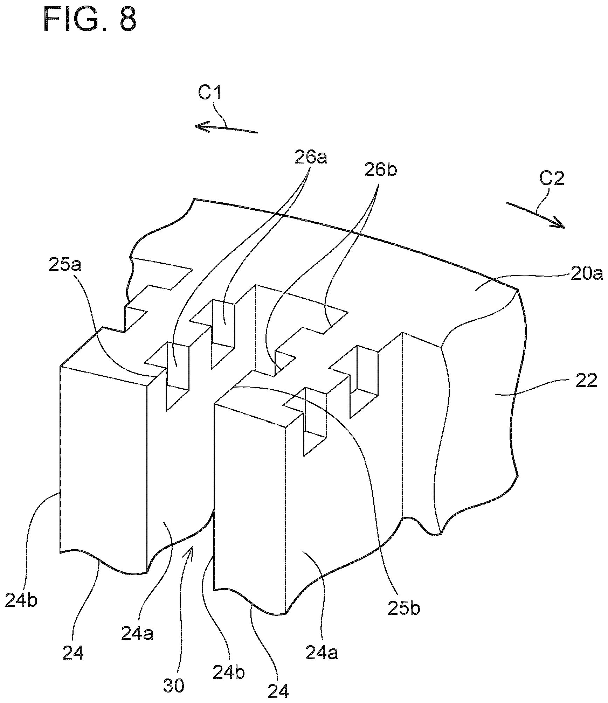

As shown in FIG. 8, each tooth 24 comprises side surfaces 24a, 24b. The side surfaces 24a, 24b are flat surfaces extending in the axial direction. Each side surface 24a is located in the direction C1 relative to a slot 30, while each side surface 24b is located in the direction C2 relative to a slot 30. Hereinafter, interfaces between the side surfaces and the end faces of each tooth 24 (i.e., end faces of each tooth 24 in the axial direction) are termed shoulders 25. As shown in FIG. 8, the shoulders 25 are edge lines extending in the radial direction. A plurality of concavities 26 is provided in each shoulder 25. More specifically, two concavities 26a are provided in each shoulder 25a between a side surface 24a and the end face 20a. The concavities 26a are spaced from each other in the radial direction. Further, two concavities 26b are provided in each shoulder 25b between a side surface 24b and the end face 20a. The concavities 26b are spaced from each other in the radial direction. Each concavity 26 is a stepped concavity. As shown in FIG. 6, the concavities 26a and the concavities 26b are alternately arranged in the radial direction in each slot 30. That is, the positions of the concavities 26a and the positions of the concavities 26b, which are located on both sides of each slot 30, are not aligned in the radial direction. More specifically, the concavities 26a are provided in portions of each shoulder 25a that face the first line portions S1 (i.e., portions of each shoulder 25a that overlap the first line portions S1 as viewed in the circumferential direction), while no concavities are provided in portions of each shoulder 25b that face the first line portions S1. Further, no concavities are provided in portions of each shoulder 25a that face the second line portions S2, while the concavities 26b are provided in portions of each shoulder 25b that face the second line portions S2. As described above, the inclined portions 52d of the first line potions S1 are inclined in the direction C1, and the inclined portions 52d of the second line portions S2 are inclined in the direction C2 (see the broken lines in FIG. 6). Thus, in each shoulder 25a located in the inclination direction of the inclined portions 52d of the first line portions S1 relative to each slot 30, the concavities 26a are provided in portions of the shoulder 25a that face the first line portions S1. In each shoulder 25b located in the inclination direction of the inclined portions 52d of the second line portions S2 relative to each slot 30, the concavities 26b are provided in portions of the shoulder 25b that face the second line portions S2.

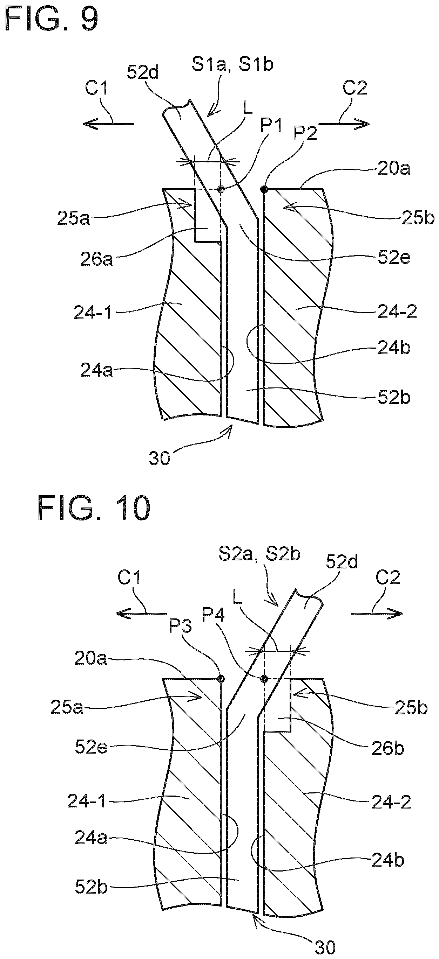

FIG. 9 shows a cross-sectional view of shoulders 25a, 25b adjacent to a first line portion S1, taken along the circumferential direction. In FIGS. 9 to 14, a tooth 24 located in the direction C1 relative to the line portion S is termed a first tooth 24-1, and a tooth 24 located in the direction C2 relative to the line portion S is termed a second tooth 24-2. In other words, a tooth 24 located in the inclination direction of the inclination portion 52d of the first line portion S1 is the first tooth 24-1, and a tooth 24 located on the opposite side of the first line portion S1 is the second tooth 24-2. Regarding teeth 24 on both sides of a line portion S, which of the teeth 24 corresponds to the first tooth or the second tooth depends on the line portion S. In FIGS. 9 to 14, the left tooth 24 is the first tooth 24-1 and the right tooth 24 is the second tooth 24-2. In the area adjacent to the first line portion S1, a concavity 26a is provided in the shoulder 25a but no concavities are provided in the shoulder 25b. In FIG. 9, a first intersection P1 is an intersection of a straight line extending along the side surface 24a of the first tooth 24-1 that faces the first line portion S1 and a straight line extending along the end face 20a, and a second intersection P2 is an intersection of a straight line extending along the side surface 24b of the second tooth 24-2 that faces the first line portion S1 and the straight line extending along the end face 20a. A shortest distance L is the shortest distance between an intersection P and a tooth 24 as viewed in the radial direction. A shortest distance L between the first intersection P1 and the first tooth 24-1 corresponds to the distance between the first intersection P1 and the side surface of the concavity 26a. Since the second intersection P2 coincides with the shoulder 25b, a shortest distance L between the second intersection P2 and the second tooth 24-2 is zero. Thus, in the area adjacent to the first line portion S 1, the shortest distance L between the first intersection P1 and the first tooth 24-1 is greater than the shortest distance L between the second intersection P2 and the second tooth 24-2. As shown in FIG. 9, the bend 52e of the first line portion S1 is located within a range of the concavity 26a in the axial direction. That is, the bend 52e of the first line portion S1 is located below the end face 20a (closer to the end face 20b than the end face 20a is) and above the bottom surface of the concavity 26a (closer to the end face 20a than the bottom surface is). The inclined portion 52d of the first line portion S1 extends through the concavity 26a (i.e., an area between the intersection P1 and the first tooth 24-1).

FIG. 10 shows a cross-sectional view of shoulders 25a, 25b adjacent to a second line portion S2, taken along the circumferential direction. In the area adjacent to the second line portion S2, no concavities are provided in the shoulder 25a but a concavity 26b is provided in the shoulder 25b. In FIG. 10, a third intersection P3 is an intersection of a straight line extending along the side surface 24a facing the second line portion S2 and the straight line extending along the end face 20a, and a fourth intersection P4 is an intersection of a straight line extending along the side surface 24b facing the second line portion S2 and the straight line extending along the end face 20a. In an area where the second line portion S2 faces the first tooth 24-1, a shortest distance L between the third intersection P3 and the first tooth 24-1 is zero. Further, in an area where the second line portion S2 faces the second tooth 24-2, a shortest distance L between the fourth intersection P4 and the second tooth 24-2 corresponds to the distance between the fourth intersection P4 and the side surface of the concavity 26b. Thus, in the area where he second line portion S2 faces the second tooth 24-2, the shortest distance L between the fourth intersection P4 and the second tooth 24-2 is greater than the shortest distance L between the third intersection P3 and the first tooth 24-1. The bend 52e of the second line portion S2 is located within the range of the concavity 26b in the axial direction. The inclined portion 52d of the second line portion S2 extends through the concavity 26b (i.e., an area between the fourth intersection P4 and the second tooth 24-2).

As shown in FIG. 7, on the end face 20b side, concavities 26c, 26d are provided in shoulders 25c, 25d of each tooth 24. Each shoulder 25c is an interface between a side surface 24a and the end face 20b, and each shoulder 25d is an interface between a side surface 24b and the end face 20b.

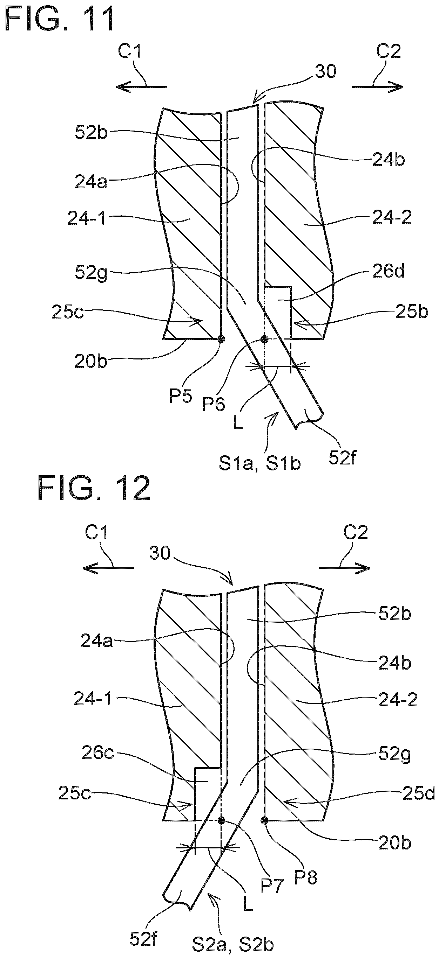

FIG. 11 shows a cross-sectional view of shoulders 25c, 25d adjacent to a first line portion S1, taken along the circumferential direction. In the area adjacent to the first line portion S1, a concavity is not provided in the shoulder 25c, but a concavity 26d is provided in the shoulder 25d. In FIG. 11, a fifth intersection P5 is an intersection of a straight line extending along the side surface 24a facing the first line portion S1 and a straight line extending along the end face 20b, and a sixth intersection P6 is an intersection of a straight line extending along the side surface 24b facing the first line portion S1 and the straight line extending along the end face 20b. In an area where the first line portion S1 faces the first tooth 24-1, a shortest distance L between the fifth intersection P5 and the first tooth 24-1 is zero. Further, in an area where the fist line portion S1 faces the second tooth 24-2, a shortest distance L between the sixth intersection P6 and the second tooth 24-2 corresponds to the distance between the sixth intersection P6 and the side surface of the concavity 26d. Thus, in the area where the fist line portion S1 faces the second tooth 24-2, the shortest distance L between the sixth intersection P6 and the second tooth 24-2 is greater than the shortest distance L between the fifth intersection P5 and the first tooth 24-1. The bend 52g of the first line portion S1 is located within the range of the concavity 26d in the axial direction. The inclined portion 52f of the first line portion S1 extends through the concavity 26d (i.e., an area between the sixth intersection P6 and the second tooth 24-2).

FIG. 12 shows a cross-sectional view of shoulders 25c, 25d adjacent to a second line portion S2, taken along the circumferential direction. In the area adjacent to the second line portion S2, a concavity 26c is provided in the shoulder 25c, and a concavity is not provided in the shoulder 25d. In FIG. 12, a seventh intersection P7 is an intersection of a straight line extending along the side surface 24a facing the second line portion S2 and the straight line extending along the end face 20b, and an eighth intersection P8 is an intersection of a straight line extending along the side surface 24b facing the second line portion S2 and the straight line extending along the end face 20b. In an area where the second line portion S2 faces the first tooth 24-1, a shortest distance L between the seventh intersection P7 and the first tooth 24-1 corresponds to the distance between the seventh intersection P7 and the side surface of the concavity 26c. Further, in an area where the second line portion S2 faces the second tooth 24-2, a shortest distance L between the eighth intersection P8 and the second tooth 24-2 is zero. Thus, in the area where the second line portion S2 faces the second tooth 24-2, the shortest distance L between the seventh intersection P7 and the first tooth 24-1 is greater than the shortest distance L between the eighth intersection P8 and the second tooth 24-2. The bend 52g of the second line portion S2 is located within the range of the concavity 26c in the axial direction. The inclined portion 52f of the second line portion S2 extends through the concavity 26c (i.e., an area between the seventh intersection P7 and the first tooth 24-1).

As described above, in the stator 10, the concavities 26 are provided in each slot 30 at portions of the shoulders 25 located in the inclination directions of the inclined portions of respective line portions S. This ensures sufficient insulation distances between the teeth 24 and the inclined portions of the line portions S while still allowing the bends 52e, 52g of the line portions S to be positioned close to the teeth 24. Positioning the bends 52e, 52g of the line portions S close to the teeth 24 allows for a reduction in the size of the stator 10 in the axial direction. Especially, in this embodiment, the inclined portions of the line portions S extend through the concavities 26, which allows for a further reduction in the size of the stator 10 in the axial direction.

In the stator 10, no concavities are provided in each slot 30 at portions of the shoulders 25 located opposite to the inclination directions of the inclined portions of respective line portions S. This ensures a wide flux path cross section in each tooth 24. Thus, magnetic saturation is suppressed in the stator 10. Therefore, an electric motor including the stator 10 is excellent in torque performance.

As described above, according to the embodiment, the stator 10 can be reduced in size and a wide flux path can be ensured in each tooth 24.

In the above embodiment, the coil is a segment coil constituted of a plurality of conductor segments, however, the coil is not limited to such a segment coil. The coil may be formed by winding a conductor line.

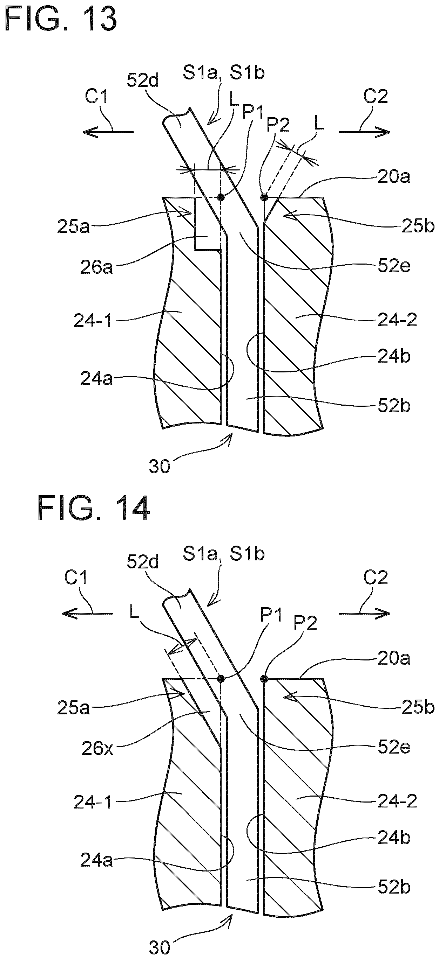

In the above embodiment, the shortest distance L is zero for the shoulders 25 located opposite to the inclination directions of the inclined portions of the line portions S. However, as shown in FIG. 13, a chamfer may be provided in a shoulder 25 located opposite to the inclination direction of an inclined portion of a line portion S. In this case as well, the stator is reduced in size and flux paths are ensured by making the shortest distance L for the shoulder 25 located in the inclination direction of the inclined portion greater than the shortest distance L for the opposite shoulder 25.

In the above embodiment, the stepped concavities 26 are provided in portions of the shoulders 25 located in the inclination directions of the inclined portions of the line portions S. However, as shown in FIG. 14, a chamfer 26x may be provided in a shoulder 25 located in the inclination direction of an inclined portion of a line portion S. The chamfer 26x increases the shortest distance L. In this case, each of the bends 52e, 52g may be located within the range of corresponding chamfer 26x in the axial direction.

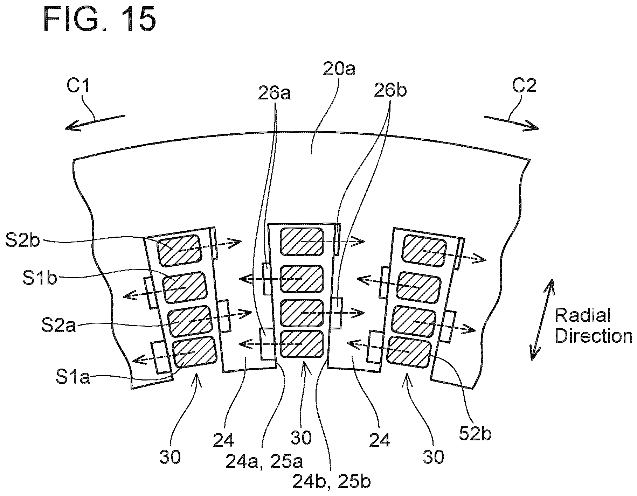

In the above embodiment, the shortest distance L is constant for all the concavities, however, the shortest distance L (e.g., width or depth of each concavity 26 in the circumferential direction) may be varied according to the positions of the concavities in the radial direction. For example, as shown in FIG. 15, the width of each slot 30 may be increased toward the outer circumference of the stator 10. In this case, it is more difficult to ensure insulation distances between the teeth 24 and line portions S located more inward in the radial direction. Thus, as shown in FIG. 15, the shortest distance L (width of each concavity 26 in the circumferential direction in FIG. 15) may be increased for concavities 26 located more inward in the radial direction. This configuration minimizes the shortest distance L for each concavity and thus ensures wider flux paths. If chamfers are provided instead of the concavities, the shortest distance L may be increased for chamfers located more inward in the radial direction.

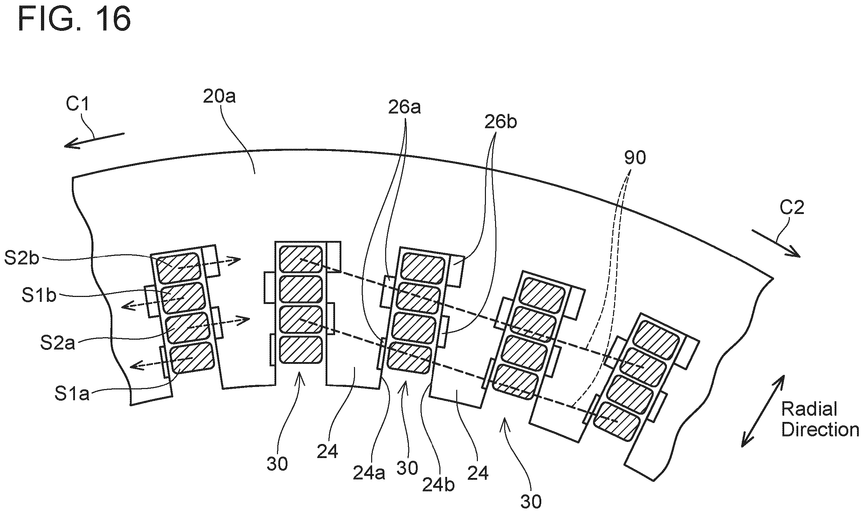

Each broken line 90 in FIG. 16 shows a connection relationship between line potions S in the coil end. As shown in FIG. 16, line portions S located closer to the outer circumference of the stator 10 have longer connection distances in the coil end and thus have inclined portions with larger inclination angles. Therefore, as shown in FIG. 16, the shortest distance L (width of each concavity 26 in the circumferential direction in FIG. 16) may be decreased for concavities located more inward in the radial direction. This configuration minimizes the shortest distance L for each concavity and thus ensures wider flux paths. If chamfers are provided instead of the concavities, the shortest distance L may be decreased for chamfers located more inward in the radial direction.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. A stator (10) comprising:
a core (20) having a cylindrical shape about a central axis extending in an axial direction; and
a coil (50) wound around the core (20),
wherein
the core (20) comprises:
a cylindrical back yoke (22); and
a plurality of teeth (24) protruding from an inner circumferential surface of the back yoke (22), extending along the axial direction, and spaced from each other in a circumferential direction,
the plurality of teeth (24) comprises:
a first tooth (24-1); and
a second tooth (24-2) spaced from the first tooth (24-1) in the circumferential direction,
the coil (50) comprises a first line portion (S1a, S1b) including a first axial portion (52b) and a first inclined portion (52d) connected to the first axial portion (52b);
the first axial portion (52b) extends along the axial direction and is located between the first tooth (24-1) and the second tooth (24-2),
the first inclined portion (52d) is inclined relative to the first axial portion (52b) in the circumferential direction toward the first tooth (24-1) and extends beyond a first end face (20a) which is one end face of the plurality of teeth (24) in the axial direction, and
as viewed along a radial direction, an intersection of a straight line extending along a side surface (24a) of the first tooth (24-1) that faces the first line portion (S1a, S1b) and a straight line extending along the first end face (20a) is defined as a first intersection (P1) and an intersection of a straight line extending along a side surface (24b) of the second tooth (24-2) that faces the first line portion (S1a, S1b) and the straight line extending along the first end face (20a) is defined as a second intersection (P2), and a shortest distance (L) between the first intersection (P1) and the first tooth (24-1) is greater than a shortest distance between the second intersection (P2) and the second tooth (24-2).

2. The stator (10) of claim 1, wherein
the coil (50) comprises a second line portion (S2a, S2b) including a second axial portion (52b) and a second inclined portion (52d) connected to the second axial portion (52b),
the second axial portion (52b) extends along the axial direction and is located between the first tooth (24-1) and the second tooth (24-2),
the first axial portion (52b) and the second axial portion (52b) are stacked in the radial direction,
the second inclined portion (52d) is inclined relative to the second axial portion (52b) in the circumferential direction toward the second tooth (24-2) and extends beyond the first end face (20a), and
as viewed along the radial direction, an intersection of a straight line extending along the side surface (24a) of the first tooth (24-1) that faces the second line portion (S2a, S2b) and the straight line extending along the first end face (20a) is defined as a third intersection (P3) and an intersection of a straight line extending along the side surface (24b) of the second tooth (24-2) that faces the second line portion (S2a, S2b) and the straight line extending along the first end face (20a) is defined as a fourth intersection (P4), and a shortest distance (L) between the fourth intersection (P4) and the second tooth (24-2) is greater than a shortest distance between the third intersection (P3) and the first tooth (24-1).

3. The stator (10) of claim 2, wherein
the first line portion (S1a, S1b) comprises a plurality of first line portions (S1a, S1b),
the second line portion (S2a, S2b) comprises a plurality of second line portions (S2a, S2b), and
the first line portions (S1a, S1b) and the second line portions (S2a, S2b) are alternately stacked in the radial direction between the first tooth (24-1) and the second tooth (24-2).

4. The stator (10) of any of claims 1-3, wherein the first inclined portion (52d) extends through an area between the first intersection (P1) and the first tooth (24-1).

5. The stator (10) of claim 1, wherein a stepped concavity (26a) is provided in a part of an interface between the side surface of the first tooth (24-1) and the first end face (20a), the part of the interface facing the first inclined portion (52d).

6. The stator (10) of claim 1, wherein a chamfer (26x) is provided in a part of an interface between the side surface of the first tooth (24-1) and the first end face (20a), the part of the interface facing the first inclined portion (52d).

7. The stator (10) of claim 5 or 6, wherein a bend (52e) between the first axial portion (52b) and the first inclined portion (52d) is located, in the axial direction, within a range of the concavity (26a) or the chamfer (26x).

8. The stator (10) of any of claims 1-3, wherein
the first line portion (S1a, S1b) comprises a third inclined portion (52f) connected to the first axial portion (52b) on an opposite side from the first inclined portion (52d),
the third inclined portion (52f) is inclined relative to the first axial portion (52b) in the circumferential direction toward the second tooth (24-2) and extends beyond a second end face (20b) which is another end face of the plurality of teeth (24) in the axial direction and is opposite from the first end face (20a),
as viewed along the radial direction, an intersection of the straight line extending along the side surface (24a) of the first tooth (24-1) that faces the first line portion (S1a, S1b) and a straight line extending along the second end face (20b) is defined as a fifth intersection (P5) and an intersection of the straight line extending along the side surface (24b) of the second tooth (24-2) that faces the first line portion (S1a, S1b) and the straight line extending along the second end face (20b) is defined as a sixth intersection (P6), and a shortest distance (L) between the sixth intersection (P6) and the second tooth (24-2) is greater than a shortest distance between the fifth intersection (P5) and the first tooth (24-1).

9. The stator (10) of claim 3, wherein shortest distances (L) between first intersections (P1) and the first tooth (24-1) and shortest distances (L) between fourth intersections (P4) and the second tooth (24-2) are larger as the first intersections (P1) and the fourth intersections (P4) are located more inward in the radial direction.

10. The stator (10) of claim 3, wherein shortest distances (L) between the first intersections (P1) and the first tooth (24-1) and shortest distances (L) between the fourth intersections (P4) and the second tooth (24-2) are smaller as the first intersections (P1) and the fourth intersections (P4) are located more inward in the radial direction.

11. The stator (10) of claim 2 or 3, wherein two first line portions (S1a, S1b) and two second line portions (S2a, S2b) are stacked in the radial direction between the first tooth (24-1) and the second tooth (24-2).
